# FASCICULE DE BREVET EUROPEEN

(11) **EP 3 314 584 B1**
(45) Date de publication et mention de la délivrance du brevet: **01.05.2019**
(21) Numéro de dépôt: 16733428.3
(22) Date de dépôt: 24.06.2016
(51) Int. Cl.: H04W 4/40, B60R 25/24, G07C 9/00, H04L 29/06, H04W 12/06, H04W 12/08, H04W 52/02

(54) **PROCÉDÉ MIS EN OEUVRE PAR UNE UNITÉ ÉLECTRONIQUE D'UN VÉHICULE**
VON EINER ELEKTRONISCHEN EINHEIT EINES FAHRZEUGS DURCHGEFÜHRTES VERFAHREN
METHOD CARRIED OUT BY AN ELECTRONIC UNIT OF A VEHICLE

(30) Priorité: 24.06.2015 FR 1555836
(43) Date de publication de la demande: 02.05.2018
(73) Titulaire: Valeo Comfort and Driving Assistance, 94046 Créteil Cedex (FR)
(72) Inventeur: LECONTE, Eric, 94046 Créteil Cedex (FR); LAIGNEL, Pascal, 94046 Créteil Cedex (FR)
(74) Mandataire: Delplanque, Arnaud
(86) Numéro de dépôt international: PCT/EP2016/064732
(87) Numéro de publication internationale: WO 2016/207387

(56) Documents cités:
- US-A1- 2015 054 618

## Description

### DOMAINE TECHNIQUE AUQUEL SE RAPPORTE L'INVENTION

La présente invention concerne les échanges de données entre un identifiant et une unité électronique d'un véhicule.

Elle concerne plus particulièrement un procédé mis en oeuvre par une telle unité électronique en vue d'un échange avec un tel identifiant via un module de communication du véhicule.

L'invention s'applique particulièrement avantageusement dans le cas où des échanges répétés sont ainsi mis en place entre l'identifiant et l'unité électronique.

### ARRIERE-PLAN TECHNOLOGIQUE

Il est connu d'utiliser un identifiant, typiquement porté par un utilisateur d'un véhicule, pour détecter l'approche de l'utilisateur et commander alors automatiquement une fonctionnalité du véhicule (telle que le déverrouillage des portes du véhicule).

On prévoit par exemple dans ce but qu'une unité électronique du véhicule commande l'émission, par un module de communication, de trames de scrutation au sein d'un signal électromagnétique ayant une portée donnée.

Lorsque l'identifiant entre dans la portée du signal, il émet une trame de réponse pour signaler sa présence.

À réception de cette trame de réponse en provenance de l'identifiant, l'unité électronique initie des échanges de données entre le module de communication et l'identifiant, par exemple en vue d'une authentification de l'identifiant par l'unité électronique.

La commande automatique de la fonctionnalité précitée (telle que le déverrouillage des portes) est alors effectuée en cas de réussite du processus d'authentification.

On prévoit en général par ailleurs la poursuite des échanges entre l'identifiant et le module de communication, afin par exemple de pouvoir localiser en permanence l'identifiant (typiquement par mesure du temps de vol des signaux échangés entre l'identifiant et une ou plusieurs antennes du module de communication).

Ces échanges durent typiquement jusqu'à ce que l'utilisateur effectue une action sur le véhicule (ouverture d'une porte ou démarrage du véhicule par exemple).

Ces échanges entrainent une consommation d'énergie qui s'avère parfois inutile, par exemple lorsque l'utilisateur mène une activité dans la portée susmentionnée du signal contenant les trames de scrutation, sans chercher à utiliser le véhicule.

Le document US2015/054618 est un exemple de l'état de l'art.

### OBJET DE L'INVENTION

Dans ce contexte, la présente invention propose un procédé selon la revendication indépendante 1, mis en oeuvre par une unité électronique d'un véhicule, comprenant les étapes suivantes :
- commande d'au moins une émission, par un module de communication du véhicule, d'une trame de scrutation au sein d'un signal électromagnétique ayant une première portée ;
- réception d'une trame de réponse en provenance d'un identifiant ;
- initiation d'échanges de données entre le module de communication et l'identifiant ;
- après une durée prédéterminée d'échanges, commande d'au moins une émission, par le module de communication, d'une trame de scrutation au sein d'un signal électromagnétique ayant une seconde portée inférieure à la première portée,
le procédé étant tel que les trames de scrutation sont émises périodiquement par le module de communication, avec une première fréquence au sein du signal électromagnétique ayant la première portée, et, avec une seconde fréquence au sein du signal électromagnétique ayant la seconde portée, la seconde fréquence étant supérieure à la première fréquence la seconde fréquence étant supérieure à la première fréquence, le procédé étant caractérisé en ce que la fréquence d'émission des trames de scrutation est variable en fonction de la portée, la fréquence augmentant lorsque la portée diminue.

Ainsi, après ladite durée prédéterminée, des trames de scrutation sont émise avec une portée réduite, de telle sorte que l'identifiant pourra être hors de portée et n'échangera donc plus avec l'unité électronique, ce qui limite la consommation électrique. Toutefois, si l'identifiant s'approche encore du véhicule et entre dans la zone de portée réduite, il sera détecté. De ce fait, la diminution de la consommation électrique ne se fait pas au détriment de la réactivité du système.

Selon d'autres caractéristiques optionnelles (et donc non limitatives) :
- l'unité électronique met fin aux échanges à expiration de ladite durée prédéterminée ;

- l'unité électronique détermine la seconde portée en fonction d'une distance de l'identifiant mesurée au cours desdits échanges ;
- l'unité électronique commande, après une durée prédéterminée d'émission de trames de scrutation au sein du signal électromagnétique ayant la seconde portée, une émission d'une trame de test au sein d'un signal électromagnétique ayant ladite première portée ;
- l'unité électronique commande, en cas de réception d'une réponse de l'identifiant à la trame de test, la poursuite de l'émission de trames de scrutation au sein du signal électromagnétique ayant la seconde portée ;
- l'unité électronique commande, en cas d'absence de réponse de l'identifiant à la trame de test, l'émission de trames de scrutation au sein du signal électromagnétique ayant la première portée ;
- le module de communication comprend au moins une antenne ;
- le signal électromagnétique ayant la première portée est obtenu par commande d'un premier courant dans l'antenne et le signal électromagnétique ayant la seconde portée est obtenu par commande d'un second courant dans l'antenne, le second courant étant inférieur au premier courant ;
- lesdits échanges comprennent une étape de réception, en provenance de l'identifiant, d'une donnée d'authentification ;
- l'unité électronique commande la mise en oeuvre d'une fonctionnalité du véhicule en cas de vérification de la donnée d'authentification.

On peut prévoir également, lorsque le module de communication comprend au moins deux antennes, que les étapes de commande d'émission d'une trame de scrutation ayant une première portée, de réception d'une trame de réponse, d'initiation d'échanges et de commande d'émission d'une trame de scrutation ayant une seconde portée soient mises en oeuvre indépendamment pour chacune desdites antennes.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente les éléments principaux d'un système comprenant un véhicule et un identifiant ;
- la figure 2 représente les étapes principales d'un exemple de procédé mis en oeuvre par une unité électronique du véhicule conformément à l'invention ;
- les figures 3 et 4 représentent respectivement la situation de l'identifiant et des chronogrammes d'échanges correspondants dans un premier exemple d'utilisation du système de la figure 1 ;
- les figures 5 et 6 représentent respectivement la situation de l'identifiant et des chronogrammes d'échanges correspondants dans un second exemple d'utilisation du système de la figure 1 ; et
- les figures 7 et 8 représentent respectivement la situation de l'identifiant et des chronogrammes d'échanges correspondants dans un troisième exemple d'utilisation du système de la figure 1.

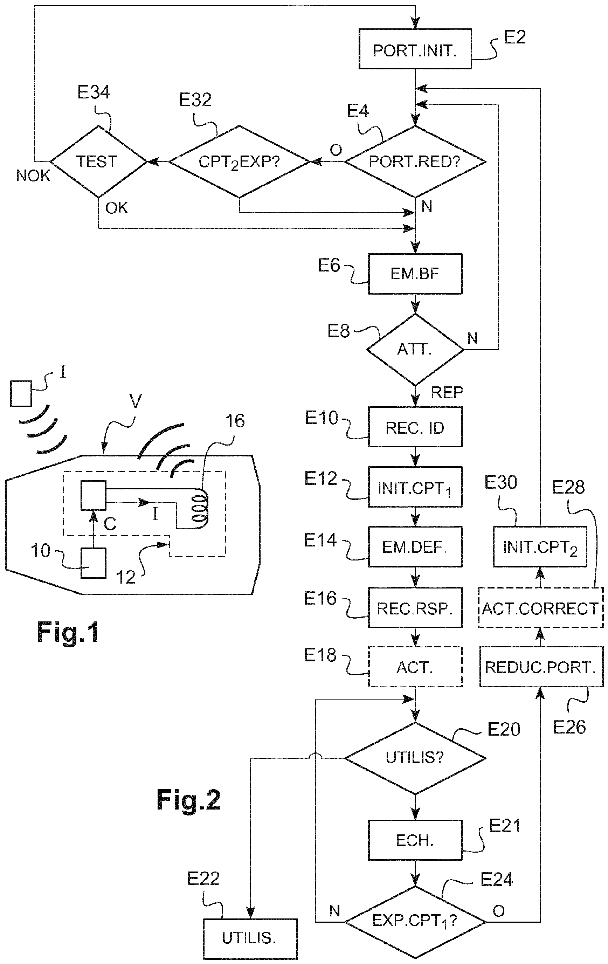

La figure 1 représente schématiquement les éléments principaux d'un système dans lequel peut être mise en oeuvre l'invention.

Un tel système comprend un véhicule V équipé d'une unité électronique de commande 10 et d'un module de communication 12.

L'unité électronique de commande 10 comprend par exemple un microprocesseur et une mémoire. La mémoire mémorise notamment des instructions de programme qui permettent, lorsqu'elles sont exécutées par le microprocesseur, la mise en oeuvre par l'unité électronique de commande 10 des procédés décrits ci-dessous. La mémoire mémorise également des valeurs ou paramètres utilisés au cours de ces procédés, par exemple la portée courante P et la période T de répétition des trames de scrutation.

En variante, l'unité électronique de commande 10 pourrait être réalisée sous la forme d'un circuit intégré à application spécifique (ou ASIC pour *"Application Specific Integrated Circuit"*).

Le module de communication 12 comprend un circuit de pilotage 14 (ou "*driver*" selon l'appellation d'origine anglo-saxonne parfois utilisée) et une antenne 16 reliée à ce circuit de pilotage 14.

Le circuit de pilotage 14 reçoit, en provenance de l'unité électronique de commande 10, un signal de commande C, sur la base duquel le circuit de pilotage 14 alimente l'antenne 16 de sorte que l'antenne 16 génère des signaux électromagnétiques.

L'unité électronique de commande 10 peut ainsi commander sélectivement l'émission par l'antenne 16 d'un signal électromagnétique basse-fréquence (typiquement de fréquence inférieure à 150 kHz, ici de fréquence égale à 125 kHz) ou d'un signal électromagnétique haute-fréquence (typiquement de fréquence supérieure à 10 MHz, ici de fréquence égale à 434 MHz).

Le signal de commande C défini notamment l'intensité I du courant parcourant l'antenne 16 lors de l'émission du signal basse-fréquence et par conséquent la portée de ce signal.

Le module de communication peut également comprendre une antenne dédiée (non représentée) pour la réception de trames haute-fréquence (434 MHz).

Le système de la figure 1 comprend également un identifiant I, généralement porté par un utilisateur du véhicule V et qui permet la commande de certaines fonctionnalités du véhicule V (par exemple le déverrouillage des portes du véhicule V), notamment lorsqu'il est approché du véhicule V, comme expliqué ci-après. L'identifiant I peut éventuellement comporter en outre des boutons de commande, à l'aide desquels l'utilisateur peut commander certaines au moins des fonctionnalités précitées ou d'autres fonctionnalités du véhicule V.

L'identifiant I comprend un circuit de communication qui reçoit les signaux électromagnétiques générés par le module de communication 12 du véhicule V lorsqu'il se trouve dans la portée de ces signaux électromagnétiques et qui émet des trames en réponse, comme expliqué plus loin.

La figure 2 représente les étapes principales d'un procédé mis en oeuvre par l'unité électronique de commande 10 en vue de la détection d'un identifiant tel que l'identifiant I et d'un échange de données avec celui-ci.

Ce procédé débute à l'étape E2 à laquelle la portée courante P du signal électromagnétique basse fréquence est initialisée à sa valeur maximale P₀ (avec par exemple P₀ = 10 m).

Le procédé se poursuit par une étape E4 à laquelle on détermine si la portée courante P est une portée réduite (strictement inférieure à la portée maximale P₀), comme cela est possible du fait des étapes décrites plus bas.

Le traitement effectué dans l'affirmative est décrit plus bas (étapes E32 et E34).

Dans la négative (c'est-à-dire lorsque la portée courante P est égale à la portée maximale P₀), ce qui est le cas lorsque l'étape E4 suit immédiatement l'étape E2, l'unité électronique de commande 10 commande à l'étape E6 l'émission par le module de communication 12 (c'est-à-dire en pratique par l'antenne 16) de signaux électromagnétiques basse-fréquence ayant la portée courante P et représentatifs d'une trame de scrutation.

En pratique, la portée courante P est obtenue en commandant le passage dans l'antenne 16 d'un courant I associé à la portée courante P.

Une trame de scrutation (ou *"polling"*) est une trame ayant un format prédéterminé et destiné aux éventuels identifiants présents à proximité pour leur signaler la présence du véhicule V. Une telle trame de scrutation peut contenir un identifiant du véhicule V.

L'étape E6 est suivie d'une étape E8 au cours de laquelle l'unité électronique de commande 10 attend, pendant une durée T, une éventuelle réception, par le module de communication 12, d'une réponse en provenance d'un identifiant I et contenant par exemple une donnée d'identification associée à l'identifiant I.

Si aucune réponse d'identifiant n'est reçue après un temps T (flèche N), le procédé mis en oeuvre par l'unité électronique de commande 10 boucle à l'étape E4 décrite ci-dessus.

On comprend dès lors que la durée d'attente T précitée correspond à la période de répétition des trames de scrutation émises successivement lors de chaque passage à l'étape E6.

Selon un mode de réalisation envisageable, la période T est variable en fonction de la portée courante P. On prévoit ici précisément que la période T diminue (et donc que la fréquence d'émission des trames de scrutation augmente) lorsque la portée courante P diminue afin de maintenir une bonne réactivité du système (la réduction de portée décrite ci-après nécessitant en effet une réactivité augmentée à l'approche de l'utilisateur portant l'identifiant).

Une telle augmentation de la fréquence d'émission des trames de scrutation n'est toutefois pas préjudiciable à la consommation électrique moyenne générée par l'émission des trames de scrutation puisque cette augmentation de la fréquence s'accompagne d'une réduction de la portée, et donc d'une réduction du courant parcourant l'antenne 16.

On prévoit même ici que le courant moyen dans l'antenne 16 soit constant (quelles que soient la portée et la fréquence d'émission des trames associée), c'est-à-dire que toute augmentation de la fréquence soit compensée par une réduction proportionnelle du courant dans l'antenne 16.

Lorsqu'une réponse en provenance d'un identifiant (ici l'identifiant I) est reçue par le module de communication 12 à l'étape E8, l'unité électronique de commande reçoit et mémorise la donnée d'identification de l'identifiant I à l'étape E10.

Du fait de la réception de cette réponse, l'unité électronique de commande 10 déclenche un premier compteur CPT₁ à l'étape E12. Ce premier compteur CPT₁ a par exemple une durée de 30 s (c'est-à-dire qu'il expire 30 s après son déclenchement). En variante, le premier compteur CPT₁ pourrait avoir une durée comprise entre 15 s et 120 s.

L'unité électronique de commande 10 poursuit ensuite l'établissement d'une connexion (via le module de communication 12) avec l'identifiant I, en émettant par exemple à l'étape E14 un défi (également dénommé *"question cryptée",* ou *"challenge"* selon l'appellation d'origine anglo-saxonne souvent utilisée) à destination de l'identifiant I. Un tel défi est en général un nombre obtenu par tirage aléatoire au sein de l'unité électronique de commande 10.

L'unité électronique de commande 10 reçoit alors (via le module de communication 12) une réponse au défi en provenance de l'identifiant I (étape E16).

On rappelle qu'une telle réponse au défi est une donnée déterminée au sein de l'identifiant I (typiquement par application d'une fonction cryptographique) en fonction du défi reçu et d'une donnée secrète (typiquement une clé cryptographique) mémorisée par l'identifiant I. Cette réponse au défi permet à l'identifiant de prouver qu'il détient la donnée secrète sans transmission de celle-ci. La réponse au défi peut de ce fait être considérée comme une donnée d'authentification.

L'unité électronique de commande 10 peut ainsi s'assurer, par vérification de la donnée d'authentification reçue, que l'identifiant I avec lequel le module de communication 12 a établi une connexion est bien l'identifiant I prévu (identifié par les données d'identification reçues et mémorisées à l'étape E10), par exemple en vérifiant la cohérence de la donnée d'identification reçue, du défi émis et de la réponse au défi (donnée d'authentification) reçue.

Lorsque l'unité électronique de commande 10 a ainsi authentifié l'identifiant I 12, l'unité électronique de commande 10 peut alors commander des actions particulières (étape E18) liées à la détection de l'identifiant I à proximité du véhicule V, telles qu'un clignotement de feux de signalisation du véhicule V ou le déverrouillage des portes du véhicule V.

L'unité électronique de commande 10 peut alors détecter une action de l'utilisateur du véhicule V, par exemple une ouverture de porte et/ou un appui sur un bouton de démarrage du moteur du véhicule (étape E20).

En cas de détection d'une telle action de l'utilisateur, le procédé se poursuit à l'étape E22 par une utilisation classique du véhicule V.

Si aucune action de l'utilisateur n'est détectée à l'instant considéré, l'unité électronique de commande 10 poursuit ses échanges de données avec l'identifiant I (étape E21), par exemple par émission EM d'une trame de données à destination de l'identifiant et réception REC d'une trame de données en réponse en provenance de l'identifiant. Grâce à de tels échanges, l'unité électronique de commande 10 peut notamment déterminer à chaque instant la distance séparant le module de communication 12 (précisément l'antenne 16) et l'identifiant I (typiquement sur la base du temps de vol des ondes électromagnétiques échangées ou par la mesure de la puissance reçue, également dénommée RSSI pour "*Received Signal Strength Indication*").

Une fois ces trames échangées, l'unité électronique de commande 10 détermine à l'étape E24 si le premier compteur CPT₁ a expiré.

Dans la négative, le procédé boucle à l'étape E20 pour détection d'une action éventuelle de l'utilisateur du véhicule V (et poursuite éventuelle des échanges).

Dans l'affirmative à l'étape E24 (*i.e.* à expiration du premier compteur CPT₁), l'unité électronique de commande 10 procède à l'étape E10 à une diminution de la portée courante P (étape E26). La nouvelle portée courante P est par exemple choisie, parmi plusieurs valeurs déterminées possibles, comme la valeur immédiatement inférieur à la distance instantanée entre le module de communication 12 et l'identifiant I (mesurée en continu par l'unité électronique de commande 10 comme expliqué plus haut). En variante, la nouvelle portée P pourrait être la valeur suivante dans une liste décroissante de valeurs de portée possibles (prédéterminées).

Cette diminution de portée P peut s'accompagner, dans le cas évoqué ci-dessus, d'une diminution de la durée d'attente T (utilisée à l'étape E8 et qui correspond comme déjà expliqué à la période de répétition des trames de scrutation).

On peut également mettre alors en oeuvre des actions correctives (étape E28), tel que le verrouillage des portes du véhicule (en particulier dans le cas où un déverrouillage a été mis en oeuvre à l'étape E18). En effet, bien que l'identifiant I ait été détecté à proximité du véhicule V, l'utilisateur n'a effectué aucune action au niveau du véhicule V et on peut donc penser qu'il n'a pas cherché à utiliser le véhicule V.

L'unité électronique de commande 10 déclenche alors un second compteur CPT₂ à l'étape E30. Le second compteur CPT₂ a par exemple une durée de 180 s (c'est-à-dire qu'il expire 180 s après son déclenchement). En variante, le second compteur CPT₂ pourrait avoir une durée comprise entre 60 s et 300 s.

Le procédé boucle alors à l'étape E4.

L'étape E4 détermine comme déjà indiqué si la portée courante P est une portée réduite (différente de la portée maximale P₀).

Lorsque la portée courante P n'est pas réduite, le procédé se poursuit à l'étape E6 comme déjà indiqué plus haut.

Lorsque la portée courante P est réduite (après passage à l'étape E26 décrite ci-dessus), le procédé se poursuit à l'étape E32 à laquelle l'unité électronique de commande 10 détermine si le second compteur CP₂ a expiré.

Dans la négative, le procédé se poursuit à l'étape E6 pour émission d'une trame de scrutation avec la portée courante P.

Dans l'affirmative (*i.e.* à expiration du second compteur CPT₂), l'unité électronique de commande 10 commande au module de communication 12 l'émission d'une trame de test avec la portée maximale P₀ (étape E34).

Ainsi, bien qu'une portée réduite soit utilisée dans ce cas pour l'émission des trames de scrutation, la trame de test de portée maximale P₀ permet de s'assurer que l'identifiant I est toujours dans la portée initiale du véhicule V.

La trame de test émise à l'étape E34 est par exemple du même type que la trame d'émission du défi décrite ci-dessus à l'étape E14.

En l'absence de réponse à l'étape E34 (par exemple après un laps de temps prédéterminé), cela signifie que l'identifiant I s'est éloigné du véhicule V depuis sa première détection à l'étape E10 et le procédé reprend donc à l'étape initiale E2.

En cas de réponse de l'identifiant à l'étape E34, l'identifiant I est toujours à proximité du véhicule (à une distance inférieure à la portée maximale P₀) et le procédé se poursuit donc à l'étape E6 pour émission d'une trame de scrutation avec la portée courante P.

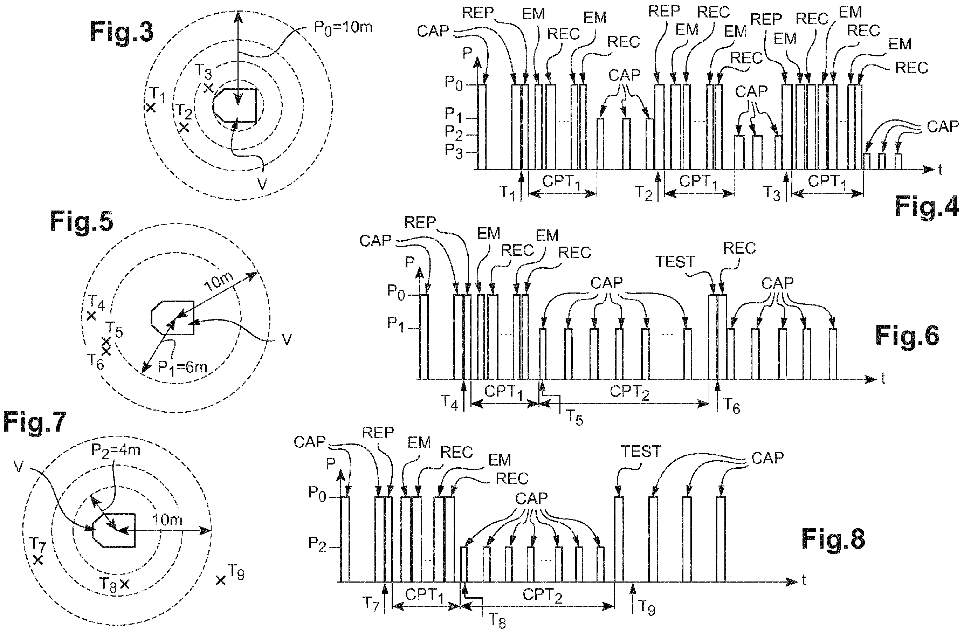

Les figures 3 et 4 représentent respectivement la situation de l'identifiant I et des chronogrammes d'échanges correspondants dans un premier exemple d'utilisation du système décrit ci-dessus.

À l'état initial, lorsqu'aucun identifiant I n'a été détecté, l'unité électronique de commande 10 commande l'émission périodique de trames de scrutation CAP avec la portée maximale P₀ (ici P₀ = 10 m), du fait de la mise en oeuvre des étapes E6 et E8 décrites plus haut (l'étape E26 de réduction de la portée n'ayant quant à elle pas été exécutée).

La période T de répétition des trames de scrutation CAP est prédéterminée, ici de 6,29 s.

Au temps T₁, l'identifiant I est situé dans la portée P₀ du signal émis par le module de communication 12 (comme représenté en figure 3) et émet donc une réponse REP à destination de l'unité électronique de commande 10.

Du fait de la réception de cette réponse REP (voir l'étape E10 décrite plus haut), l'unité électronique de commande 10 déclenche le premier compteur CPT₁ (étape E12) et initie des échanges avec l'identifiant I (émissions EM de données par le module de communication 12 à destination de l'identifiant I et réceptions REC de données par le module de communication 12 en provenance de l'identifiant I).

Ces échanges EM, REC se poursuivent tant que le premier compteur CPT₁ n'a pas expiré, sauf si une action de l'utilisateur est détectée dans le véhicule V (étape E20).

En l'absence d'action de l'utilisateur (comme c'est le cas dans l'exemple décrit ici), à expiration du premier compteur CPT₁ (étape E24), l'unité électronique de commande 10 met fin aux échanges EM, REC mentionnés ci-dessus et reprend l'émission période de trames de scrutation CAP, mais avec une portée P réduite (du fait de la mise en oeuvre des étapes E26, puis E6 et E8 décrites plus haut).

L'unité électronique de commande 10 choisit par exemple comme déjà indiqué en tant que portée réduite la portée immédiatement inférieure à la distance de l'identifiant I dans une liste de portées possibles. On rappelle que la distance de l'identifiant I peut être déterminée au cours des échanges EM, REC précités.

On considère ici que l'identifiant n'a pas bougé depuis l'instant T₁ mentionné plus haut, qu'il est située à 9 m du véhicule V et que la liste de portées possibles est la suivante : 10 m (P₀), 6 m (P₁), 4 m (P₂), 2 m (P₃). La portée réduite P choisie est donc ici de 6 m (P₁).

On remarque comme déjà expliqué plus haut que la période de répétition T des trames de scrutation CAP peut également être réduite.

L'identifiant I étant toujours à la position occupée à l'instant T₁ dans l'exemple décrit ici, il n'est pas atteint par les trames de scrutation CAP émises avec la portée réduite P et ne répond donc pas à ces trames de scrutation CAP.

Ainsi, grâce à la réduction de la portée d'émission des trames de scrutation après une durée prédéterminée (correspondant à celle du premier compteur CPT₁), il n'y a plus d'échanges entre le véhicule V et l'identifiant I tant que l'identifiant I reste au-delà de la portée réduite P, ce qui limite la consommation des circuits électroniques impliqués.

À un instant T₂, l'identifiant I est déplacé et entre dans la nouvelle portée P (portée réduite P₁, ici égale à 6 m) ; l'identifiant I émet par conséquent une réponse REP à la dernière trame de scrutation CAP.

Des échanges EM, REC sont donc mis en place, comme déjà expliqué ci-dessus, entre l'unité électronique de commande 10 et l'identifiant I, pendant la durée prédéterminée du premier compteur CPT₁.

En l'absence d'action de l'utilisateur au sein du véhicule V pendant cette durée prédéterminée, il est mis fin aux échanges EM, REC et l'unité électronique de commande 10 commande l'émission périodique de trames de scrutation CAP avec une durée encore réduite P₂ (ici égale à 4 m, en considérant par exemple que l'identifiant est toujours dans sa position occupée à l'instant T₂).

À un instant T₃, l'identifiant I est déplacé et entre dans la nouvelle portée courante P (ici P₂, soit 4 m) ; l'identifiant I émet par conséquent une réponse REP à la dernière trame de scrutation CAP.

Des échanges EM, REC sont donc mis en place entre l'unité électronique de commande 10 et l'identifiant I, pendant la durée prédéterminée du premier compteur CPT₁.

En l'absence d'action de l'utilisateur au sein du véhicule V pendant cette durée prédéterminée, il est mis fin aux échanges EM, REC et l'unité électronique de commande 10 commande l'émission périodique de trames de scrutation CAP avec une durée encore réduite P₃ (ici égale à 2 m, en considérant par exemple que l'identifiant est toujours dans sa position occupée à l'instant T₃).

Si l'identifiant I s'approchait ensuite à moins de la portée P₃ (ici à moins de 2 m) du véhicule V, des échanges seraient à nouveau mis en place, ce qui permettrait par exemple le déverrouillage du véhicule V.

En revanche, si l'identifiant I reste à plus de 2 m du véhicule V, la présence de l'identifiant I à proximité du véhicule V serait testée à expiration du second compteur CPT₂, comme déjà décrit et expliqué ci-dessous en référence aux figures 6 et 8.

Les figures 5 et 6 représentent respectivement la situation de l'identifiant I et des chronogrammes d'échanges correspondants dans un second exemple d'utilisation du système décrit ci-dessus.

À l'état initial, lorsqu'aucun identifiant I n'a été détecté, l'unité électronique de commande 10 commande l'émission périodique de trames de scrutation CAP avec la portée maximale P₀ (ici P₀ = 10 m), du fait de la mise en oeuvre des étapes E6 et E8 décrites plus haut (l'étape E26 de réduction de la portée n'ayant quant à elle pas été exécutée).

Au temps T₄, l'identifiant I est situé dans la portée P₀ du signal émis par le module de communication 12 (comme représenté en figure 5) et émet donc une réponse REP à destination de l'unité électronique de commande 10.

Du fait de la réception de cette réponse REP (voir l'étape E10 décrite plus haut), l'unité électronique de commande 10 met en place des échanges avec l'identifiant I (émissions EM de données par le module de communication 12 à destination de l'identifiant I et réceptions REC de données par le module de communication 12 en provenance de l'identifiant I).

Ces échanges EM, REC se poursuivent tant que le premier compteur CPT₁ (déclenché à réception de la réponse REP) n'a pas expiré, sauf si une action de l'utilisateur est détectée dans le véhicule V (étape E20). L'unité électronique de commande 10 mesure par ailleurs au cours de ces échanges la distance de l'identifiant I (relativement au module de communication 12).

En l'absence d'action de l'utilisateur (comme c'est le cas dans l'exemple décrit ici), à expiration du premier compteur CPT₁ (étape E24), l'unité électronique de commande 10 met fin aux échanges EM, REC mentionnés ci-dessus et reprend l'émission périodique de trames de scrutation CAP, mais avec une portée P réduite (du fait de la mise en oeuvre des étapes E26, puis E6 et E8 décrites plus haut). Par ailleurs, lors du passage à l'étape E30, l'unité électronique de commande 10 déclenche le second compteur CPT₂.

On considère ici que l'identifiant I est alors situé à la position indiquée en figure 5 pour l'instant T₅ (soit à une distance d'environ 8 m) et l'unité électronique de commande 10 choisit ainsi une portée réduite P₁ de 6 m (portée immédiatement inférieure à la distance mesurée dans une liste prédéterminée de portées possibles Pᵢ, ici P₁, P₂, P₃).

Dans l'exemple représenté sur les figures 5 et 6, l'identifiant I reste à une distance inférieure à P₀ (ici 10 m) mais supérieure à P₁ (ici 6 m) pendant un temps relativement long. C'est par exemple le cas lorsque l'utilisateur du véhicule V (lequel utilisateur porte l'identifiant I) a une activité à proximité du véhicule V, sans toutefois souhaiter utiliser le véhicule V.

Dans ce cas, le procédé décrit à la figure 2 boucle sur les étapes E4, E32, E6 et E8 (émission périodique de trames de scrutation CAP) jusqu'à expiration du second compteur CPT₂.

À expiration du second compteur CPT₂, l'unité électronique de commande 10 commande l'émission par le module de communication 12 d'une trame de test TEST avec la portée maximale P₀.

On propose ici que cette trame de test TEST soit identique à celle émise à l'étape E14 (émission d'un défi à destination de l'identifiant I).

L'identifiant I étant toujours dans la portée maximale P₀ dans l'exemple décrit ici (position indiquée pour l'instant T₆ en figure 5), il répond à la trame de TEST, ici par une réponse au défi précité, de manière semblable à ce qui a été décrit ci-dessus à l'étape E16.

En variante, la trame de test TEST pourrait être une trame de scrutation, auquel cas l'identifiant I répondrait par une réponse du même type que celle de l'étape E10.

Du fait que l'unité électronique de commande 10 reçoit une réponse à la trame de TEST (ce qui indique que l'identifiant est toujours dans la portée maximale P₀, ici de 10 m, par rapport au véhicule V), l'étape E34 est suivie de l'étape E6 (émission d'une trame de scrutation CAP avec une portée réduite) et le module de communication 12 reprend l'émission périodique de trames de scrutation CAP avec une portée réduite P.

Les figures 7 et 8 représentent respectivement la situation de l'identifiant I et des chronogrammes d'échanges correspondants dans un troisième exemple d'utilisation du système décrit ci-dessus.

Comme dans les deux autres exemples décrits ci-dessus, à l'état initial, l'unité électronique de commande 10 commande l'émission périodique de trames de scrutation CAP avec la portée maximale P₀ (ici P₀ = 10 m).

Au temps T₇, l'identifiant I est situé dans la portée P₀ du signal émis par le module de communication 12 (comme représenté en figure 7) et émet donc une réponse REP à destination de l'unité électronique de commande 10.

Du fait de la réception de cette réponse REP, l'unité électronique de commande 10 met en place des échanges avec l'identifiant I (émissions EM de données par le module de communication 12 à destination de l'identifiant I et réceptions REC de données par le module de communication 12 en provenance de l'identifiant I).

Ces échanges EM, REC se poursuivent tant que le premier compteur CPT₁ (déclenché à réception de la réponse REP) n'a pas expiré, sauf si une action de l'utilisateur est détectée dans le véhicule V (étape E20). L'unité électronique de commande 10 mesure par ailleurs au cours de ces échanges la distance de l'identifiant I (relativement au module de communication 12).

En l'absence d'action de l'utilisateur (comme c'est le cas dans l'exemple décrit ici), à expiration du premier compteur CPT₁ (étape E24), l'unité électronique de commande 10 met fin aux échanges EM, REC mentionnés ci-dessus et reprend l'émission périodique de trames de scrutation CAP, mais avec une portée P réduite (du fait de la mise en oeuvre des étapes E26, puis E6 et E8 décrites plus haut). Par ailleurs, lors du passage à l'étape E30, l'unité électronique de commande 10 déclenche le second compteur CPT₂.

On considère ici que l'identifiant I est alors situé à la position indiquée en figure 5 pour l'instant T₈ (soit à une distance d'environ 5 m) et l'unité électronique de commande 10 choisit ainsi une portée réduite P₂, ici de 4 m (portée immédiatement inférieure à la distance mesurée dans une liste prédéterminée de portées possibles Pᵢ).

Dans l'exemple représenté sur la figure 7, l'identifiant I passe à quelques mètres du véhicule V, sans toutefois s'approcher à moins de 4 m, de sorte que l'identifiant I ne reçoit pas les trames de scrutation CAP de portée réduite P₂ et n'émet donc aucune réponse à destination du véhicule V.

Le procédé décrit à la figure 2 boucle par conséquent sur les étapes E4, E32, E6 et E8 (émission périodique de trames de scrutation CAP) jusqu'à expiration du second compteur CPT₂.

À expiration du second compteur CPT₂, l'unité électronique de commande 10 commande l'émission par le module de communication 12 d'une trame de test TEST avec la portée maximale P₀.

On considère ici que l'identifiant I est alors en dehors de la portée maximale P₀ (par exemple à la position indiquée pour l'instant T₉ en figure 5) et que l'identifiant ne reçoit pas par conséquent cette la trame de TEST.

Dans ce cas, l'unité électronique de commande 10 ne reçoit aucune réponse à la trame de TEST et, après un laps de temps prédéterminé, l'étape E34 renvoie à l'étape E2 pour retour à l'état initial (émission périodique de trames de scrutation de portée maximale P₀).

Dans l'exemple décrit ci-dessus, une seule antenne 16 (omnidirectionnelle) est utilisée. On peut prévoir en variante d'utiliser une pluralité d'antennes directionnelles (par exemple deux antennes associées respectivement aux deux côtés du véhicule) et de mettre en oeuvre le processus de réduction de la portée décrit ci-dessus indépendamment pour chaque antenne.

Ainsi par exemple, si un premier identifiant est présent d'un côté du véhicule à une distance fixe de quelques mètres, inférieure à la portée maximale P₀, la réduction de portée proposée ci-dessus (appliquée à l'antenne dirigée vers le côté susmentionné) permet de mettre le premier identifiant hors de portée et de détecter un second identifiant qui s'approcherait du véhicule par un autre côté.

## Revendications

1. Procédé mis en oeuvre par une unité électronique (10) d'un véhicule (V), comprenant les étapes suivantes :
- commande (E6) d'au moins une émission, par un module de communication (12) du véhicule (V), d'une trame de scrutation (CAP) au sein d'un signal électromagnétique ayant une première portée (P₀) ;
- réception (E10) d'une trame de réponse (REP) en provenance d'un identifiant (I) ;
- initiation (E14) d'échanges (EM, REC) de données entre le module de communication (12) et l'identifiant (I) ;
- après une durée prédéterminée d'échanges, commande (E6) d'au moins une émission, par le module de communication (12), d'une trame de scrutation (CAP) au sein d'un signal électromagnétique ayant une seconde portée (P₁ ; P₂ ; P₃) inférieure à la première portée (P₀)
le procédé étant tel que les trames de scrutation (CAP) sont émises périodiquement par le module de communication (12), avec une première fréquence au sein du signal électromagnétique ayant la première portée (P₀), et, avec une seconde fréquence au sein du signal électromagnétique ayant la seconde portée (P₁; P₂; P₃), la seconde fréquence étant supérieure à la première fréquence,
le procédé étant **caractérisé en ce que** la fréquence d'émission des trames de scrutation est variable en fonction de la portée, la fréquence augmentant lorsque la portée diminue. fréquence.

2. Procédé selon la revendication 1, dans lequel l'unité électronique (10) met fin aux échanges à expiration de ladite durée prédéterminée.

3. Procédé selon l'une des revendications 1 à 2, dans lequel l'unité électronique (10) détermine la seconde portée (P₁ ; P₂ ; P₃) en fonction d'une distance de l'identifiant (I) mesurée au cours desdits échanges (EM, REC).

4. Procédé selon l'une des revendications 1 à 3, dans lequel l'unité électronique (10) commande, après une durée prédéterminée d'émission de trames de scrutation (CAP) au sein du signal électromagnétique ayant la seconde portée (P₁ ; P₂), une émission d'une trame de test (TEST) au sein d'un signal électromagnétique ayant ladite première portée (P₀).

5. Procédé selon la revendication 4, dans lequel l'unité électronique (10) commande, en cas de réception d'une réponse (REC) de l'identifiant (I) à la trame de test (TEST), la poursuite de l'émission de trames de scrutation (CAP) au sein du signal électromagnétique ayant la seconde portée (P₁).

6. Procédé selon la revendication 4 ou 5, dans lequel l'unité électronique (10) commande, en cas d'absence de réponse de l'identifiant (I) à la trame de test (TEST), l'émission de trames de scrutation (CAP) au sein du signal électromagnétique ayant la première portée (P₀).

7. Procédé selon l'une des revendications 1 à 6, dans lequel le module de communication comprend au moins une antenne (16), dans lequel le signal électromagnétique ayant la première portée (P₀) est obtenu par commande d'un premier courant dans l'antenne (16) et dans lequel le signal électromagnétique ayant la seconde portée (P₁ ; P₂ ; P₃) est obtenu par commande d'un second courant dans l'antenne (16), le second courant étant inférieur au premier courant.

8. Procédé selon l'une des revendications 1 à 7, dans lequel lesdits échanges comprennent une étape de réception (E16), en provenance de l'identifiant (I), d'une donnée d'authentification et dans lequel l'unité électronique (10) commande la mise en oeuvre d'une fonctionnalité du véhicule en cas de vérification de la donnée d'authentification.

9. Procédé selon l'une des revendications 1 à 8, dans lequel le module de communication comprend au moins deux antennes et dans lequel les étapes de commande d'émission d'une trame de scrutation ayant une première portée, de réception d'une trame de réponse, d'initiation d'échanges et de commande d'émission d'une trame de scrutation ayant une seconde portée sont mises en oeuvre indépendamment pour chacune desdites antennes.

## Patentansprüche

1. Von einer elektronischen Einheit (10) eines Fahrzeugs (V) durchgeführtes Verfahren, umfassend die folgenden Schritte:
- Steuern (E6) mindestens einer Sendung, durch ein Kommunikationsmodul (12) des Fahrzeugs (V), eines Abfragerahmens (CAP) innerhalb eines elektromagnetischen Signals mit einer erste Reichweite (P₀);
- Empfangen (E10) eines Antwortrahmens (REP) von einer Kennung (I);
- Initiieren (E14) von Übermittlungen (EM, REC) von Daten zwischen dem Kommunikationsmodul (12) und der Kennung (I);
- nach einer vorbestimmten Zeitspanne von Übermittlungen, Steuern (E6) mindestens einer Sendung, durch das Kommunikationsmodul (12), eines Abfragerahmens (CAP) innerhalb eines elektromagnetischen Signals mit einer zweiten Reichweite (P₁; P₂; P₃), die kleiner als die erste Reichweite (P₀) ist,
wobei das Verfahren so abläuft, dass die Abfragerahmen (CAP) periodisch von dem Kommunikationsmodul (12) mit einer ersten Frequenz innerhalb des elektromagnetischen Signals mit der ersten Reichweite (P₀) und mit einer zweiten Frequenz innerhalb des elektromagnetischen Signals mit der zweiten Reichweite (P₁; P₂; P₃) gesendet werden, wobei die zweite Frequenz höher als die erste Frequenz ist,
wobei das Verfahren **dadurch gekennzeichnet ist, dass** die Sendefrequenz der Abfragerahmen in Abhängigkeit von der Reichweite variabel ist, wobei sich die Frequenz erhöht, wenn die Reichweite abnimmt.

2. Verfahren nach Anspruch 1, wobei die elektronische Einheit (10) die Übermittlungen bei Ablauf der vorbestimmten Zeitspanne beendet.

3. Verfahren nach einem der Ansprüche 1 bis 2, wobei die elektronische Einheit (10) die zweite Reichweite (P₁; P₂; P₃) in Abhängigkeit von einer Distanz der Kennung (I) bestimmt, die während der Übermittlungen (EM, REC) gemessen wird.

4. Verfahren nach einem der Ansprüche 1 bis 3, wobei die elektronische Einheit (10) nach einer vorbestimmten Zeitspanne des Sendens von Abfragerahmen (CAP) innerhalb des elektromagnetischen Signals mit der zweiten Reichweite (P₁; P₂), eine Sendung eines Testrahmens (TEST) innerhalb eines elektromagnetischen Signals mit der ersten Reichweite (P₀) steuert.

5. Verfahren nach Anspruch 4, wobei die elektronische Einheit (10) im Falle eines Empfangs einer Antwort (REC) der Kennung (I) am Testrahmen (TEST) die Fortführung des Sendens von Abfragerahmen (CAP) innerhalb des elektromagnetischen Signals mit der zweiten Reichweite (P₁) steuert.

6. Verfahren nach Anspruch 4 oder 5, wobei die elektronische Einheit (10) bei Nichtvorhandensein einer Antwort der Kennung (I) am Testrahmen (TEST) das Senden von Abfragerahmen (CAP) innerhalb des elektromagnetischen Signals mit der ersten Reichweite (P₀) steuert.

7. Verfahren nach einem der Ansprüche 1 bis 6, wobei das Kommunikationsmodul mindestens eine Antenne (16) umfasst, wobei das elektromagnetische Signal mit der ersten Reichweite (P₀) durch Steuern eines ersten Stroms in der Antenne (16) erhalten wird und wobei das elektromagnetische Signal mit der zweiten Reichweite (P₁; P₂; P₃) durch Steuern eines zweiten Stroms in der Antenne (16) erhalten wird, wobei der zweite Strom kleiner als der erste Strom ist.

8. Verfahren nach einem der Ansprüche 1 bis 7, wobei die Übermittlungen einen Schritt des Empfangens (E16) einer Authentifizierungsangabe von der Kennung (I) umfassen und wobei die elektronische Einheit (10) im Falle einer Überprüfung der Authentifizierungsangabe die Durchführung einer Funktionalität des Fahrzeugs steuert.

9. Verfahren nach einem der Ansprüche 1 bis 8, wobei das Kommunikationsmodul mindestens zwei Antennen umfasst und wobei die Schritte des Steuerns des Sendens eines Testrahmens mit einer ersten Reichweite, des Empfangens eines Antwortrahmens, des Initiierens von Übermittlungen und des Steuerns des Sendens eines Abfragerahmens mit einer zweiten Reichweite unabhängig für jede der Antennen durchgeführt werden.

## Claims

1. Method implemented by an electronic unit (10) of a vehicle (V), comprising the following steps:
- commanding (E6) at least one emission, by a communication module (12) of the vehicle (V), of a polling frame (CAP) within an electromagnetic signal having a first range (P₀);
- receiving (E10) a response frame (REP) originating from an identifier (I);
- initiating (E14) exchanges (EM, REC) of data between the communication module (12) and the identifier (I);
- after a predetermined duration of exchanges, commanding (E6) at least one emission, by the communication module (12), of a polling frame (CAP) within an electromagnetic signal having a second range (P₁; P₂; P₃) smaller than the first range (P₀),
the method being such that the polling frames (CAP) are emitted periodically by the communication module (12), with a first frequency within the electromagnetic signal having the first range (P₀), and, with a second frequency within the electromagnetic signal having the second range (P₁; P₂; P₃), the second frequency being greater than the first frequency,
the method being **characterized in that** the frequency of emission of the polling frames is variable as a function of the range, the frequency increasing as the range decreases.

2. Method according to Claim 1, in which the electronic unit (10) terminates the exchanges on expiry of the said predetermined duration.

3. Method according to one of Claims 1 to 2, in which the electronic unit (10) determines the second range (P₁; P₂; P₃) as a function of a distance to the identifier (I) measured in the course of the said exchanges (EM, REC).

4. Method according to one of Claims 1 to 3, in which the electronic unit (10) commands, after a predetermined duration of emission of polling frames (CAP) within the electromagnetic signal having the second range (P₁; P₂), an emission of a test frame (TEST) within an electromagnetic signal having the said first range (P₀).

5. Method according to Claim 4, in which the electronic unit (10) commands, in case of reception of a response (REC) of the identifier (I) to the test frame (TEST), the continuation of the emission of polling frames (CAP) within the electromagnetic signal having the second range (P₁).

6. Method according to Claim 4 or 5, in which the electronic unit (10) commands, in case of absence of response of the identifier (I) to the test frame (TEST), the emission of polling frames (CAP) within the electromagnetic signal having the first range (P₀).

7. Method according to one of Claims 1 to 6, in which the communication module comprises at least one antenna (16), in which the electromagnetic signal having the first range (P₀) is obtained by commanding a first current in the antenna (16) and in which the electromagnetic signal having the second range (P₁; P₂; P₃) is obtained by commanding a second current in the antenna (16), the second current being smaller than the first current.

8. Method according to one of Claims 1 to 7, in which the said exchanges comprise a step of receiving (E16), originating from the identifier (I), an authentication datum and in which the electronic unit (10) commands the implementation of a functionality of the vehicle in case of verification of the authentication datum.

9. Method according to one of Claims 1 to 8, in which the communication module comprises at least two antennas and in which the steps of commanding emission of a polling frame having a first range, of receiving a response frame, of initiating exchanges and of commanding emission of a polling frame having a second range are implemented independently for each of the said antennas.
